## Europäisches Patentamt
## European Patent Office
## Office européen des brevets

(11) Veröffentlichungsnummer: **0 170 882**
**A1**

# (12) EUROPÄISCHE PATENTANMELDUNG

(21) Anmeldenummer: 85108231.3

(22) Anmeldetag: 03.07.85

(51) Int. Cl.⁴: **H 02 M 1/092**, H 02 H 7/12

(30) Priorität: 17.07.84 DE 3426766

(43) Veröffentlichungstag der Anmeldung: **12.02.86** **Patentblatt 86/7**

(84) Benannte Vertragsstaaten: **AT CH DE FR GB IT LI SE**

(71) Anmelder: **Siemens Aktiengesellschaft, Berlin und München Wittelsbacherplatz 2, D-8000 München 2 (DE)**

(72) Erfinder: **Thiele, Gerd, Dipl.-Ing., Lessingstrasse 3b, D-8520 Erlangen (DE)**
Erfinder: **Heinzler, Franz, Dipl.-Ing., Im Heuschlag 24, D-8520 Erlangen (DE)**
Erfinder: **Vukasovic, Lovro, Dipl.-Ing., Dresdener Strasse 8c, D-8520 Erlangen (DE)**
Erfinder: **Fähnrich, Wolfgang, Heroldsberger Mühlweg 13, D-8560 Lauf (DE)**

(54) **Schaltungsanordnung zur Überwachung eines Thyristors.**

(57) Die Erfindung betrifft eine Schaltungsanordnung zur Überwachung eines Thyristors (1), dem in einem Parallelzweig eine Reihenschaltung aus einem Bedämpfungswiderstand (2) und einem Bedämpfungskondensator (3) zugeordnet ist, mit einer Signalgebervorrichtung (4), an deren Ausgang (5) eine Leuchtdiode (6) zur Aussendung von Lichtsignalen an eine Auswerteeinrichtung angeschlossen ist.

Um keine eigene Energieversorgung für die Schaltungsanordnung vorsehen zu müssen und um einen besonders einfachen und daher funktionssicheren Aufbau der Schaltungsanordnung zu erreichen, liegt die Signalgebervorrichtung (4) eingangsseitig in Reihe mit dem Bedämpfungskondensator (3) und enthält Schaltungsmittel zur Erzeugung einer aus dem Verschiebungsstrom durch den Bedämpfungskondensator (3) abgeleiteten Ausgangsgröße zur Beaufschlagung der Leuchtdiode (6).

0170882

Siemens Aktiengesellschaft          Unser Zeichen
Berlin und München                  VPA  **84P3270** E

Schaltungsanordnung zur Überwachung eines Thyristors

Die Erfindung betrifft eine Schaltungsanordnung zur Überwachung eines Thyristors, dem in einem Parallelzweig eine Reihenschaltung aus einem Bedämpfungswiderstand und einem Bedämpfungskondensator zugeordnet ist, mit einer Signalgebervorrichtung, an deren Ausgang eine Leuchtdiode zur Aussendung von Lichtsignalen an eine Auswerteeinrichtung angeschlossen ist.

Eine derartige Schaltung ist in der "etz", Heft 25, Band 102, Dezember 1981, auf Seite 1341 f in Bild 7 dargestellt. Die bekannte Schaltungsanordnung ist Bestandteil einer Thyristorabschnittselektronik, die jeweils einem von mehreren Thyristoren in einem Ventilzweig zugeordnet ist. Zur Stromversorgung der Thyristorabschnittselektronik ist eine Hilfsenergieauskoppelschaltung vorgesehen, die in einem Parallelzweig zu dem Thyristor in Reihe mit einem Bedämpfungswiderstand und einem Bedämpfungskondensator angeordnet ist; die Hilfsenergieauskoppelschaltung entnimmt aus dem durch den Bedämpfungswiderstand und den Bedämpfungskondensator fließenden Strom elektrische Energie und gibt diese an eine Hilfsenergieversorgungsschaltung der Thyristorabschnittselektronik ab. Zur Überwachung des Thyristors enthält die Thyristorabschnittselektronik eine Signalgebervorrichtung mit einem ohmschen Spannungsteiler, der parallel zu dem Thyristor geschaltet ist. An dem Teilerabgriff des ohmschen Spannungsteilers ist eine Signalverarbeitungsschaltung angeschlossen, der ein Lichtsignalsender mit einer Leuchtdiode nachgeordnet ist, die bei Ansteuerung Lichtsignale aussendet; die Lichtsignale werden über einen Lichtleiter an eine auf Erdpotential liegende Auswerteeinrichtung übertragen.

Bf 3 Un / 20.06.1984

Der Erfindung liegt die Aufgabe zugrunde, eine Schaltungsanordnung zur Überwachung eines Thyristors anzugeben, die
infolge Verzichts auf eine eigene Energieversorgungsschaltung besonders einfach und damit funktionssicher
aufgebaut ist.

Zur Lösung dieser Aufgabe liegt bei der Schaltungsanordnung
der eingangs angegebenen Art erfindungsgemäß die
Signalgebervorrichtung in Reihe mit dem Bedämpfungskondensator und enthält Schaltungsmittel zur Erzeugung einer
aus dem Verschiebungsstrom durch den Bedämpfungskondensator
abgeleiteten Ausgangsgröße zur Beaufschlagung der
Leuchtdiode.

Der wesentliche Vorteil der erfindungsgemäßen Schaltungsanordnung besteht darin, daß der durch die Reihenschaltung
aus dem Bedämpfungswiderstand und dem Bedämpfungskondensator
fließende Verschiebungsstrom in zweifacher Weise zur Überwachung des Thyristors ausgenutzt wird. Der Verschiebungsstrom tritt nämlich jeweils als Folge einer Änderung des
Betriebszustandes des Thyristors (Leiten, Sperren,
Blockieren) auf, so daß die von der Signalgebervorrichtung
aus dem jeweiligen Verschiebungsstrom abgeleitete Ausgangsgröße die in dem Verschiebungsstrom enthaltene Information
über den Wechsel des jeweiligen Betriebszustandes des
Thyristors beinhaltet; zusammen mit dieser Information
stellt der Verschiebungsstrom auch die erforderliche Energie
zur Verfügung, um die Leuchtdiode am Ausgang der Signalgebervorrichtung zur Erzeugung eines Lichtsignales anzusteuern, weil die Leuchtdiode mit der aus dem Verschiebungsstrom abgeleiteten Ausgangsgröße beaufschlagt ist. Eine
eigene Energieversorgungsschaltung zur Stromversorgung der
erfindungsgemäßen Schaltungsanordnung ist daher nicht
erforderlich. Dadurch, daß die Ausgangsgröße sowohl die zu
übertragende Information als auch die zur Erzeugung des
Lichtsignales notwendige Energie enthält, ist eine besonders gute Ausnutzung der Energie des Verschiebungsstromes möglich, um so eine hohe Lichtleistung des von der Leuchtdiode ausgesandten Lichtsignales zu erhalten; bei Aussendung von Lichtsignalen mit hoher Lichtleistung können nämlich auch kostengünstigere, mit relativ hoher Dämpfung behaftete Lichtleiter Verwendung finden, um die Lichtsignale dennoch fehlerfrei von der Leuchtdiode zu der Auswerteeinrichtung zu übertragen.

Zur Erfassung des Verschiebungsstromes durch den Bedämpfungskondensator kann die Signalgebervorrichtung eingangsseitig in Reihe mit dem Bedämpfungswiderstand angeordnet sein. Auf diese Weise wird nämlich der bei Änderung des Betriebszustandes auftretende Verschiebungsstrom durch den Bedämpfungskondensator vollständig von der Signalgebervorrichtung erfaßt, so daß ein besonders hoher Energieanteil des Verschiebungsstromes zur Erzeugung von Lichtsignalen hoher Lichtleistung nutzbar ist.

Ebenso vorteilhaft ist eine Ausbildung der erfindungsgemäßen Schaltungsanordnung, bei der die Signalgebervorrichtung eingangsseitig parallel zu dem Bedämpfungswiderstand oder einem Teil von diesem angeordnet ist. Dabei erfaßt die Signalgebervorrichtung an dem Bedämpfungswiderstand eine dem Verschiebungsstrom proportionale Spannung, ohne daß sich an der unmittelbaren Verbindung der Reihenschaltung aus dem Bedämpfungswiderstand und dem Bedämpfungskondensator mit dem Thyristor etwas ändert.

Bei einer weiteren vorteilhaften Ausbildung der erfindungsgemäßen Schaltungsanordnung enthält die Signalgebervorrichtung eingangsseitig einen Stromwandler, der mit seinen Primärstromzuführungsteilen in Reihe mit dem Bedämpfungswiderstand und dem Bedämpfungskondensator angeordnet ist; bei Verwendung eines Durchführungsstromwandlers ist auch bei dieser Ausbildung der erfindungsgemäßen Schaltungsanordnung die Reihenschaltung aus dem Bedämpfungswiderstand und dem Bedämpfungskondensator unmittelbar mit dem Thyristor verbunden, so daß sich die Signalgebervorrichtung auch nachträglich dem zu überwachenden Thyristor zuordnen läßt. Besonders vorteilhaft ist es, wenn der Stromwandler einen Eisenkern mit geringer Sättigungsmagnetisierung aufweist, weil dann die jeweilige Energie zur Ansteuerung der Leuchtdiode unabhängig von dem jeweils fließenden Verschiebungsstrom ist. Sobald nämlich die zeitliche Änderung des Verschiebungsstromes einen vorgegebenen Wert überschreitet, ist der Eisenkern des Stromwandlers bis zu seiner Sättigungsmagnetisierung magnetisiert, so daß der Stromwandler keine weitere Energie aus dem Verschiebungsstrom an die Signalgebervorrichtung überträgt, wodurch eine Überlastung der Leuchtdiode verhindert wird.

Die Signalgebervorrichtung der erfindungsgemäßen Schaltungsanordnung enthält vorteilhafterweise eine Gleichrichteranordnung, die eingangsseitig in der Signalgebervorrichtung angeordnet ist. Da nämlich der Verschiebungsstrom in Abhängigkeit von der jeweiligen ihn verursachenden Änderung des Betriebszustandes des Thyristors in jeweils unterschiedlicher Richtung durch den Bedämpfungskondensator fließt, kann durch die Auslegung der Gleichrichteranordnung festgelegt werden, welche Änderungen des Betriebszustandes des Thyristors erfaßt und durch Lichtsignale an die Auswerteeinrichtung rückgemeldet werden sollen. Ist die Gleichrichteranordnung als Einweggleichrichter ausgebildet, so wird bei entsprechender Polung des Einweggleichrichters nur der Übergang des Thyristors vom blockierenden in den leitenden Betriebszustand (Zünden) und vom leitenden in den sperrenden Betriebszustand erfaßt. Soll der Thyristor auf Änderungen aller möglichen Betriebszustände hin überwacht werden, so besteht die Gleichrichteranordnung aus einem Vollweggleichrichter. Die Verwendung der Gleichrichteranordnung verhindert außerdem, daß an der Leuchtdiode eine für diese zu hohe Spannung in Sperrichtung auftreten kann, weil der größte Teil dieser Spannung an den Gleichrichterelementen der Gleichrichteranordnung abfällt. Ist die Signalgebervorrichtung mit ihren Eingangsanschlüssen in Reihe mit dem Bedämpfungswiderstand und dem Bedämpfungskondensator angeordnet, so ist es bei Verwendung einer als Einweggleichrichter ausgebildeten Gleichrichteranordnung erforderlich, daß sie eine Freilaufdiode enthält; diese ist dabei derart zwischen den Eingangsklemmen der Signalgebervorrichtung angeordnet, daß im Sperrzustand des Einweggleichrichters ein Stromfluß über die Freilaufdiode möglich ist.

Bei einer vorteilhaften Ausbildung der erfindungsgemäßen Schaltungsanordnung ist der Gleichrichteranordnung eine Spannungsteileranordnung nachgeordnet; zwischen dem Ausgang der Spannungsteileranordnung und dem Ausgang der Signalgebervorrichtung liegt ein Schwellenspannungselement, das in einen stromleitenden Zustand übergeht, sobald die an ihm abfallende Spannung einen vorgegebenen Schwellenwert überschreitet. Auf diese Weise wird verhindert, daß der netzfrequente sinusförmige Anteil der Spannung an dem Thyristor von der erfindungsgemäßen Schaltungsanordnung als Änderung des Betriebszustandes des Thyristors interpretiert wird und zur Aussendung von Lichtsignalen an die Auswerteeinrichtung führt. Der von dem sinusförmigen Anteil der Spannung an dem Thyristor hervorgerufene Verschiebungsstrom ist nämlich zu schwach, um an dem Schwellenspannungselement eine Spannung zu erzeugen, die den vorgegebenen Schwellenwert überschreitet und einen Stromfluß durch das Schwellenspannungselement und die nachgeordnete Leuchtdiode ermöglicht. Ein weiterer Vorteil besteht darin, daß bei der Überwachung des Thyristors auf seine Zündfähigkeit die Möglichkeit besteht zu unterscheiden, ob jeweils eine normale betriebsmäßige Bedarfszündung oder eine außerordentliche Schutzzündung des Thyristors erfolgt ist. Bei Bedarfs- und Schutzzündung des Thyristors fließen nämlich unterschiedlich starke Verschiebungsströme durch den Bedämpfungskondensator, so daß die von dem jeweiligen Verschiebungsstrom an dem Schwellenspannungselement hervorgerufene Spannung jeweils für unterschiedlich lange Zeit die Schwellenspannung überschreitet und daher zur Aussendung unterschiedlich langer Lichtsignale durch die Leuchtdioden führen.

Eine weitere Erhöhung der Zuverlässigkeit der erfindungsgemäßen Schaltungsanordnung wird dadurch erreicht, daß die Spannungsteileranordnung ein Tiefpaßglied mit einem Widerstand und einem mit diesem in Reihe liegenden Speicherkondensator ist. Erst wenn der Verschiebungsstrom durch den Bedämpfungskondensator ausreicht, um den Speicherkondensator auf eine dem Schwellenwert des Schwellenspannungselementes entsprechende Spannung aufzuladen, erfolgt eine Ansteuerung der Leuchtdiode zur Aussendung eines Lichtsignales; auf diese Weise wird eine fehlerhafte Rückmeldung einer Änderung des Betriebszustandes des Thyristors durch den netzfrequenten sinusförmigen Anteil der Spannung an dem Thyristor verhindert.

Eine besonders hohe Lichtleistung der von der Leuchtdiode ausgesandten Lichtsignale läßt sich dadurch erreichen, daß das Schwellenspannungselement eine Kippeinrichtung ist, die in einen stromleitenden Zustand übergeht, sobald die an ihr abfallende Spannung einen vorgegebenen Schwellenwert überschreitet und erst dann von dem stromleitenden Zustand in einen sperrenden Zustand übergeht, wenn der durch sie fließende Strom einen Mindestwert unterschreitet. Dadurch steht fast die gesamte in dem Speicherkondensator des Tiefpaßgliedes gespeicherte Energie zur Erzeugung eines Lichtsignales zur Verfügung, weil sich der Speicherkondensator nahezu vollständig über die Kippeinrichtung und die Leuchtdiode entladen kann, sobald die Spannung an dem Speicherkondensator den Schwellenwert der Kippeinrichtung überschreitet. Die Kippeinrichtung läßt sich auf vielfältige Weise, beispielsweise durch eine Kippdiode (Break-Over-Diode), eine Shockleydiode oder durch einen Hilfsthyristor mit einer Zenerdiode zwischen seinem Anodenanschluß und seinem Gateanschluß realisieren.

Bei einer weiteren Ausbildung der erfindungsgemäßen Schaltungsanordnung liegt in einem Längszweig zwischen dem Ausgang der Gleichrichteranordnung und dem Ausgang der Signalgebervorrichtung ein kapazitiver Speicher; mit den Eingangsanschlüssen der Signalgebervorrichtung steht ein Kippspannungsschalter in Verbindung, der in einen stromleitenden Zustand kippt, sobald die Spannung an dem kapazitiven Speicher einen vorgegebenen Schwellenwert überschreitet. Der Kippspannungsschalter kann dabei entweder direkt zwischen den Eingangsanschlüssen der Signalgebervorrichtung liegen oder an dem Ausgang der Gleichrichteranordnung angeschlossen sein. Bei dieser Ausführungsform der erfindungsgemäßen Schaltungsanordnung lassen sich impulsförmige Lichtsignale erzeugen, wobei eine Überlastung der Leuchtdiode vermieden wird, weil der zur Erzeugung eines Lichtsignales durch die Leuchtdiode fließende Strom den kapazitiven Speicher mit konstanter Ladung auflädt; sobald die Spannung an dem kapazitiven Speicher nach einer Zeitdauer den vorgegebenen Schwellenwert überschreitet, wird der Kippspannungsschalter leitend und verhindert eine weiteren Stromfluß durch die Leuchtdiode. Diese Ausführung der erfindungsgemäßen Schaltungsanordnung ist besonders für die Anordnung der Signalgebervorrichtung mit ihren Eingangsanschlüssen in Reihe mit dem Bedämpfungswiderstand und dem Bedämpfungskondensator geeignet, weil unmittelbar nach der Aussendung des Lichtsignales der Kippspannungsschalter die Eingangsanschlüsse der Signalgebervorrichtung elektrisch kurzschließt, so daß die Schutzwirkung der Reihenschaltung aus dem Bedämpfungswiderstand und dem Bedämpfungskondensator für den Thyristor erhalten bleibt.

Um zu verhindern, daß während der Dauer eines Betriebszustandes des Thyristors netzfrequente sinusförmige Anteile der Spannung an dem Thyristor Stromimpulse durch die Leuchtdiode hervorrufen können, ist vorteilhafterweise parallel zu dem kapazitiven Speicher eine zeitabhängig gesteuerte Schalteinrichtung angeordnet, die nach einem vorgegebenen Zeitintervall stromleitend wirkt. Die zeitabhängig gesteuerte Schalteinrichtung weist bei einer besonders einfachen Ausführungen einen Hilfsthyristor auf, dem eine Reihenschaltung aus einem Widerstand und einem Kondensator parallel geschaltet ist; der Gateanschluß des Hilfsthyristors ist über eine Zenerdiode mit der Verbindungsstelle des Widerstandes und des Kondensators verbunden. Die Zeitkonstante des Widerstandes und den Kondensators ist so gewählt, daß der Kondensator unmittelbar nach der Aussendung eines Lichtsignales durch die Spannung an dem kapazitiven Speicher innerhalb des vorgegebenen Zeitintervalles bis auf die Zenerspannung der Zenerdiode aufgeladen wird, so daß daraufhin der Hilfsthyristor zündet und erst jetzt eine Entladung des kapazitiven Speichers ermöglicht.

Zur Erläuterung der Erfindung ist in
Fig. 1 ein erstes Ausführungsbeispiel der erfindungsgemäßen Schaltungsanordnung und in
Fig. 2 eine Weiterbildung des Ausführungsbeispieles nach Fig. 1 dargestellt.
Fig. 3 zeigt in einem Diagramm den Verlauf von in Fig. 2 bezeichneten Strömen. In
Fig. 4 ist ein weiteres Ausführungsbeispiel der erfindungsgemäßen Schaltungsanordnung und in
Fig. 5 eine Weiterbildung einer Einzelheit aus Fig. 4 dargestellt.
Fig. 6 zeigt eine zusätzliche Ausbildung der erfindungsgemäßen Schaltungsanordnung und
Fig. 7 eine Weiterbildung einer Einzelheit aus Fig. 6.

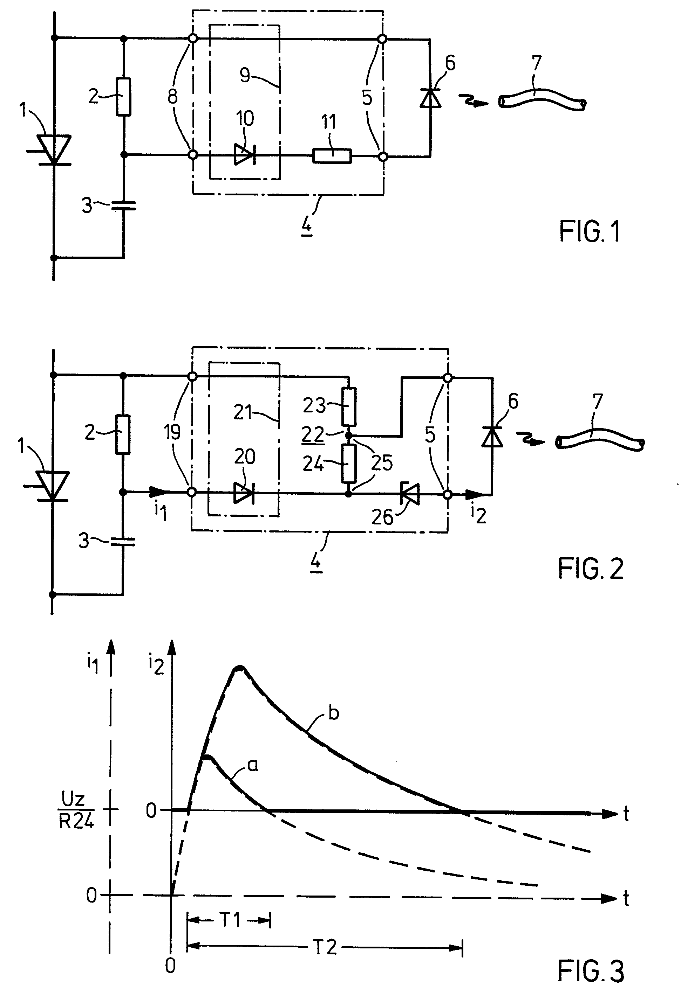

Alle in den Figuren 1, 2, 4 und 7 gezeigten Ausführungsbeispiele der erfindungsgemäßen Schaltungsanordnung dienen
jeweils zur Überwachung eines Thyristors 1, der beispielsweise Bestandteil eines hier nicht gezeigten Ventilzweiges
mit mehreren Thyristoren in einer Stromrichteranlage sein
kann. Weiterhin kann der Thyristor 1 ein elektrisch
zündbarer oder ein lichtzündbarer Thyristor sein. Um den
Thyristor 1 vor Spannungsspitzen zu schützen, liegt in einem
Parallelzweig zu dem Thyristor 1 ein Bedämpfungswiderstand 2
in Reihe mit einem Bedämpfungskondensator 3. In Reihe mit
dem Bedämpfungskondensator 3 ist eine Signalgebervorrichtung
4 angeordnet. An dem Ausgang 5 der Signalgebervorrichtung 4
ist eine Leuchtdiode 6, die beispielsweise eine
Infrarotleuchtdiode sein kann, angeschlossen. Die
Leuchtdiode 6 ist an einem Leitungsende eines hier nur
abschnittsweise dargestellten Lichtleiters 7 optisch
angekoppelt; an seinem anderen Leitungsende ist der
Lichtleiter 7 an eine ebenfalls nicht dargestellte
Auswerteeinrichtung angeschlossen.

Das in Fig. 1 dargestellte Ausführungsbeispiel der
erfindungsgemäßen Schaltungsanordnung dient zur Überwachung
des Thyristors 1 auf seine Zündfähigkeit und seine Sperrfähigkeit. Dazu ist die Signalgebervorrichtung 4 mit ihren
Eingangsanschlüssen 8 direkt an dem Bedämpfungswiderstand 2
angeschlossen. Es besteht auch die Möglichkeit, die Signalgebervorrichtung 4 mit dem Eingangsanschlüsen 8 an einem Teil
des Bedämpfungswiderstandes 2 anzuschließen, wobei der Bedämpfungswiderstand 2 einen Spannungsteiler bildet und die
Eingangsanschlüsse 8 Teilerabgriffe des Spannungsteilers
bilden. Die Signalgebervorrichtung 4 enthält eine Gleichrichteranordnung 9, die als Einweggleichrichter mit einer
Diode 10 ausgebildet ist. Die Gleichrichteranordnung 9
ist eingangsseitig an den Eingangsanschlüssen 8 der Signalgebervorrichtung 4 angeschlossen; ausgangsseitig steht die Gleichrichteranordnung 9 über einen Strombegrenzungswiderstand 11 mit dem Ausgang 5 der Signalgebervorrichtung 4 in
Verbindung.

Solange der Thyristor 1 sperrt oder blockiert, sich also in
einem nichtleitenden Betriebszustand befindet, wird der
Bedämpfungskondensator 3 über den Bedämpfungswiderstand 2 in
Abhängigkeit von dem Spannungsverlauf an dem Thyristor 1
geladen. Stimmt die Richtung der Spannung an dem Thyristor 1
mit seiner Durchlaßrichtung überein und wird der Thyristor 1
gezündet, so geht er von einem blockierenden in einen
leitenden Betriebszustand über. Dabei entlädt sich der
Bedämpfungskondensator 3 mit einem ersten Teilentladestrom
über den Bedämpfungswiderstand 2 und den Thyristor 1 und mit
einem zweiten Teilentladestrom über die Diode 10 der Gleichrichteranordnung 9, den Strombegrenzungswiderstand 11, die
Leuchtdiode 6 und den Thyristor 1. Der zweite Teilentladestrom erzeugt in der Leuchtdiode 6 ein Lichtsignal, das über
den Lichtwellenleiter 7 an die nicht dargestellte Auswerteeinrichtung übertragen wird.

Beim Übergang des Thyristors 1 von dem leitenden in den
sperrenden Betriebszustand entsteht an dem Thyristor 1 eine
Spannung, die der Durchlaßrichtung des Thyristors entgegengesetzt ist. Diese Spannung bewirkt einen Verschiebungsstrom
durch den Bedämpfungskondensator 3, wobei ein Teil des Verschiebungsstromes durch den Bedämpfungswiderstand 2 und ein
weiterer Teil des Verschiebungsstromes durch die Diode 10,
den Strombegrenzungswiderstand 11 und die Leuchtdiode 6
fließt. Eine Unterscheidung der Lichtsignale, ob sie als
Folge einer erfolgreichen Zündung des Thyristors 1 oder
wegen des Übergangs des Thyristors 1 von dem leitenden in
den sperrenden Zustand von der Leuchtdiode 6 ausgesendet
worden sind, findet in der nicht dargestellten Auswerteeinrichtung durch die Auswertung der zeitlichen Aufeinanderfolge der empfangenen Lichtsignale in bezug auf den jeweiligen Zündzeitpunkt des Thyristors 1 statt; das eine erfolgreiche Zündung des Thyristors 1 rückmeldende Lichtsignal folgt nämlich zeitlich unmittelbar auf den Zündzeitpunkt des Thyristors 1.

Mit dem in Fig. 2 dargestellten Ausführungsbeispiel der erfindungsgemäßen Schaltungsanordnung läßt sich der Thyristor 1 zusätzlich daraufhin überwachen, ob ein Übergang des Thyristors 1 in den leitenden Betriebszustand als Folge einer normalen betriebsmäßigen Bedarfszündung oder als Folge einer Schutzzündung stattgefunden hat. Eine Schutzzündung ist immer dann notwendig, wenn nach einer erfolglosen Bedarfszündung die Spannung an dem Thyristor 1 in Richtung seiner Durchlaßrichtung einen für den Thyristor 1 unzulässig hohen Wert annehmen kann. Die Signalgebervorrichtung 4 der Schaltungsanordnung nach Fig. 2 ist mit ihren Eingangsanschlüssen 19 an dem Bedämpfungswiderstand 2 angeschlossen. Die Signalgebervorrichtung 4 enthält eine als Einweggleichrichter mit einer Diode 20 ausgebildete Gleichrichteranordnung 21, die eingangsseitig mit den Eingangsanschlüssen 5 der Signalgebervorrichtung 4 verbunden ist. Der Gleichrichteranordnung 21 ist ausgangsseitig eine Spannungsteileranordnung 22 nachgeordnet, die aus zwei in Reihe geschalteten Widerständen 23 und 24 besteht. Zwischen dem von den Anschlüssen des Widerstandes 24 gebildeten Ausgang 25 der Spannungsteileranordnung 22 und dem Ausgang 5 der Signalgebervorrichtung 4 ist in einem Längszweig ein Schwellenspannungselement 26 angeordnet, das von einem sperrenden in einen stromleitenden Zustand übergeht, sobald die an ihm abfallende Spannung einen vorgegebenen Schwellenwert überschreitet. Bei dem dargestellten Ausführungsbeispiel der erfindungsgemäßen Schaltungsanordnung besteht das Schwellenspannungselement 26 aus einer Zenerdiode, deren Zenerspannung dem vorgegebenen Schwellenwert entspricht.

Beim Zünden des Thyristors 1 entlädt sich der Bedämpfungskondensator 3 mit einem ersten Teilstrom über den Bedämpfungswiderstand 2 und den Thyristor 1 und mit einem
zweiten Teilstrom $i_1$ durch die Signalgebervorrichtung 4 und
den Thyristor 1. Der Bedämpfungswiderstand 2 ist wesentlich
kleiner als die Widerstände 23 und 24 der Spannungsteileranordnung 22, so daß die Zeitkonstante der Entladung des
Bedämpfungskondensators 3 fast ausschließlich von dessen
Kapazität und der Größe des Bedämpfungswiderstandes 2
abhängig ist. Der zweite Teilstrom $i_1$ fließt über die Diode
20 der Gleichrichteranordnung 21 und teilt sich dann in
einen Strom durch den Widerstand 24 und einen weiteren Strom
$i_2$ durch das Schwellenspannungselement 26 und die Leuchtdiode 6 auf. Der Strom $i_2$ durch die Leuchtdiode 6 fließt
jedoch nur, solange der Teilstrom $i_1$ groß genug ist, um an
dem Widerstand 24 einen der Zenerspannung des aus der Zenerdiode bestehenden Schwellenspannungselement 26 entsprechenden
Spannungsabfall zu erzeugen. Da eine Schutzzündung des
Thyristors 1 im Vergleich zu einer Bedarfszündung bei einer
viel größeren Spannung an dem Thyristor 1 erfolgt, fließt
bei einer Schutzzündung im Vergleich zu einer Bedarfszündung
auch ein wesentlich größerer Entladestrom und Teilentlade
strom $i_1$ des Bedämpfungskondensators. Aufgrund der unterschiedlichen Größe des Entladestromes des Bedämpfungskondensators
3 ist die jeweilige Dauer, in der der Strom $i_2$ durch die
Leuchtdiode 6 fließt und damit die Dauer des jeweils
erzeugten Lichtsignales unterschiedlich. Um dieses zu
verdeutlichen, ist in Fig. 3 in einem Diagramm mit
ausgezogenen Linien der Verlauf des Stromes $i_2$ durch die
Leuchtdiode 6 und strichliert der Verlauf des Teilstromes $i_1$
in die Signalgebervorrichtung 4 jeweils in Abhängigkeit von
der Zeit t dargestellt. Der Kurvenzug a zeigt den Verlauf
beider Ströme $i_1$ und $i_2$ bei einer betriebsmäßigen Bedarfszündung des Thyristors 1, und der Kurvenzug b zeigt den Verlauf der Ströme $i_1$ und $i_2$ bei einer Schutzzündung des
Thyristors 1. In beiden Fällen ist der Zündzeitpunt durch t = 0 gekennzeichnet. Bei einer Bedarfszündung des Thyristors 1 (Kurvenzug a) fließt unmittelbar nach dem Zündzeitpunkt ein Teilentladestrom $i_1$, der sich nach einem hohen Anfangswert mit der Zeitkonstante des Bedämpfungswiderstand 2 und den Bedämpfungskondensators 3 abschwächt. Während der Dauer $T_1$, in der der Teilentladestrom $i_1$ größer als das Verhältnis der Zenerspannung Uz der Zenerdiode 26 zu dem Wert R24 des Widerstandes 24 ist, fließt der Strom $i_2$ durch die Leuchtdiode 6 und erzeugt ein Lichtsignal gleicher Dauer. Bei einer Schutzzündung des Thyristors 1 (Kurvenzug b) ist der Anfangswert des Teilentladestromes $i_1$ infolge der höheren Spannung an dem Thyristor 1 wesentlich größer, als bei einer Bedarfszündung, so daß der abklingende Teilentladestrom $i_1$ für eine längere Zeitdauer $T_2$ größer als das Verhältnis der Zenerspannung Uz der Zenerdiode 26 zu dem Wert R24 des Widerstandes 24 ist. Dementsprechend fließt auch der Strom $i_2$ für die längere Zeitdauer $T_2$ durch die Leuchtdiode 6 und erzeugt ein entsprechend langes Lichtsignal. Die Auswertung der Zeitdauern $T_1$ und $T_2$ erfolgt in der nicht dargestellten Auswerteeinrichtung unter Berücksichtigung des jeweiligen Zündwinkels, unter dem der Thyristor 1 gezündet wird.

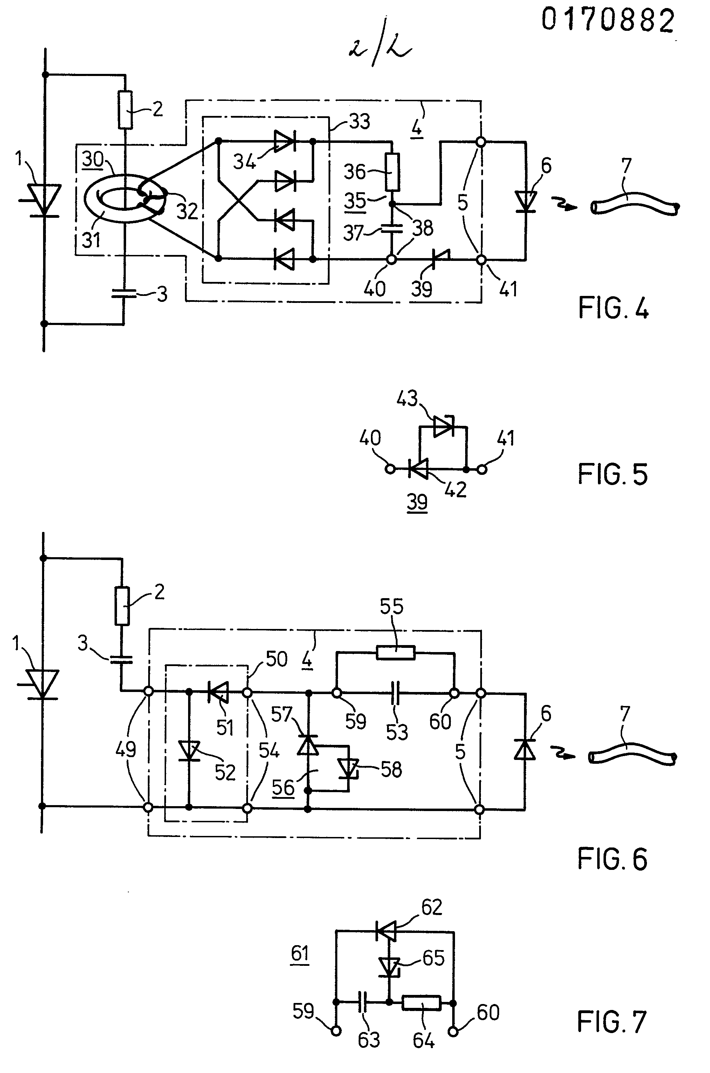

Mit dem in Fig. 4 dargestellten Ausführungsbeispiel der erfindungsgemäßen Schaltungsanordnung läßt sich der Thyristor 1 auf jeden Wechsel seiner Betriebszustände (Leiten, Sperren, Blockieren) hin untersuchen. Die Signalgebervorrichtung 4 enthält eingangsseitig einen Stromwandler 30, der mit seinen Primärstromzuführungsteilen in Reihe mit dem Bedämpfungswiderstand 2 und dem Bedämpfungskondensator 3 angeordnet ist; die Primärstromzuführungsteile des Stromwandlers 30 werden dabei durch einen Leitungsabschnitt der Reihenschaltung aus dem Bedämpfungswiderstand 2 und dem Bedämpfungskondensator 3 gebildet. Der Stromwandler 30 weist einen Eisenkern 31 mit geringer Sättigungsmagnetisierung auf, der eine Sekundärwicklung 32 trägt. An dieser Sekundärwicklung 32 liegt eine Gleichrichteranordnung 33, die aus vier zu einem Vollweggleichrichter angeordneten Dioden 34 besteht. Die Gleichrichteranordnung 33 ist ausgangsseitig mit einer Spannungsteileranordnung 35 verbunden. Die Spannungsteileranordnung 35 besteht aus einem Tiefpaßglied mit einem Widerstand 36 und einem mit diesem in Reihe liegenden Speicherkondensator 37; die Anschlüsse des Speicherkondensators 37 bilden dabei den Ausgang 38 der Spannungsteileranordnung 35. Zwischen diesem Ausgang 38 und dem Ausgang 5 der Signalgebervorrichtung 4 ist in einem Längszweig ein Schwellenspannungselement 39 angeordnet, das aus einer Kippdiode besteht.

Sobald der Thyristor 1 seinen Betriebszustand ändert, fließt durch die Reihenschaltung des Bedämpfungswiderstandes 2 und des Bedämpfungskondensators 3 ein Verschiebungsstrom. Dieser induziert in der Sekundärwicklung 32 des Stromwandlers 30 eine Spannung, wobei die übertragene Energie aufgrund der geringen Sättigungsmagnetisierung des Stromwandlers 30 begrenzt ist. Auf diese Weise wird eine mögliche Überlastung der Leuchtdiode 6 verhindert und die Lichtleistung der ausgesandten Lichtsignale jeweils konstant gehalten. An dem Ausgang der Gleichrichteranordnung 33 entsteht eine Spannung, die den Speicherkondensator 37 der das Tiefpaßglied bildenden Spannungsteileranordnung 35 über deren Widerstand 36 auflädt. Erst dann, wenn die zeitliche Änderung des Verschiebungsstromes so groß ist, daß der Speicherkondensator 37 durch die Spannung an der Sekundärwicklung 32 des Stromwandlers 30 auf eine der Zenerspannung der das Schwellenspannungselement 39 bildenden Kippdiode entsprechenden Spannung aufgeladen ist, wird das Schwellenspannungselement 39 leitend, so daß ein Strom durch die Leuchtdiode 6 fließt und diese ein Lichtsignal abgibt. Dadurch wird verhindert, daß die Leuchtdiode 6 fehlerhafterweise durch den netzfrequenten sinusförmigen Spannungsanteil der Spannung an dem Thyristor 1 angesteuert wird.

In Fig. 5 ist eine weitere Ausbildung des in der Schaltungsanordnung nach Fig. 4 zwischen den mit den Bezugszeichen 40 und 41 versehenen Anschlußpunkten angeordneten Schwellenspannungselementes 39 dargestellt. Das Schwellenspannungselement 39 nach Fig. 5 bildet eine Kippeinrichtung, die aus einem zwischen den Anschlüssen 40 und 41 liegenden Hilfsthyristor 42 und einer zwischen der Anode des Hilfsthyristors 42 und seinem Gateanschluß angeordneten Zenerdiode 43 besteht. Sobald die Spannung an dem Speicherkondensator 37 der Spannungsteileranordnung 35 die Zenerspannung der Zenerdiode 43 überschreitet, bewirkt diese eine Zündung des Hilfsthyristors 42. Der Speicherkondensator 37 kann sich nun vollständig über den Hilfsthyristor 42 und die Leuchtdiode 6 entladen, so daß diese ein Lichtsignal mit besonders hoher Lichtleistung aussendet. Erst wenn der Speicherkondensator 37 nahezu vollständig entladen ist und der Strom durch die Leuchtdiode 6 und den Hilfsthyristor 42 unter einen den Haltestrom des Hilfsthyristors 42 entsprechenden Mindestwert sinkt, geht der Hilfsthyristor 42 wieder in einen sperrenden Zustand über.

Bei dem in Fig. 6 dargestellten Ausführungsbeispiel der erfindungsgemäßen Schaltungsanordnung ist die Signalgebervorrichtung 4 mit ihren Eingangsanschlüssen 49 in Reihe mit dem Bedämpfungswiderstand 2 und dem Bedämpfungskondensator 3 angeordnet. Die Signalgebervorrichtung 4 enthält eine Gleichrichteranordnung 50, die eingangsseitig an den Eingangsanschlüssen 49 der Signalgebervorrichtung 4 liegt. Die Gleichrichteranordnung 50 besteht aus einem Einweggleichrichter mit einer Diode 51 in einem Längszweig der Gleichrichteranordnung 50 und mit einer Freilaufdiode 52 in einem Querzweig der Gleichrichteranordnung 50 zwischen

0170882

den Eingangsanschlüssen 49 der Signalgebervorrichtung 4. Die Signalgebervorrichtung 4 enthält weiterhin einen kapazitiven Speicher 53, der in einem Längszweig zwischen dem Ausgang 54 der Gleichrichteranordnung 50 und dem Ausgang 5 der Signalgebervorrichtung 4 angeordnet ist. Parallel zu dem kapazitiven Speicher 53 liegt ein Entladungswiderstand 55. In der Signalgebervorrichtung 4 ist zusätzlich ein Kippspannungsschalter 56 angeordnet, der mit den Eingangsanschlüssen der Signalgebervorrichtung 4 in Verbindung steht; bei dem dargestellten Ausführungsbeispiel der erfindungsgemäßen Schaltungsanordnung ist dazu der Kippspannungsschalter 56 an dem Ausgang 54 der Gleichrichteranordnung 50 geschaltet. Es besteht natürlich auch die Möglichkeit, den Kippspannungsschalter 56 direkt zwischen den Eingangsanschlüssen 49 der Signalgebervorrichtung 4 anzuordnen. Der Kippspannungsschalter 56 besteht aus einem Hilfsthyristor 57, zwischen dessen Anodenanschluß und Gateanschluß eine Zenerdiode 58 liegt; in Abwandlung dazu kann der Kippspannungsschalter 56 beispielsweise auch aus einer Shockleydiode oder einer Kippdiode (Break-Over-Diode) bestehen.

Sobald der Thyristor 1 seinen jeweiligen Betriebszustand ändert, fließt durch den Bedämpfungswiderstand 2 und den Bedämpfungskondensator 3 ein Verschiebungsstrom. Beim Zünden des Thyristors 1 oder bei seinem Übergang von dem leitenden in den sperrenden Betriebszustand fließt dieser Verschiebungsstrom durch die Diode 51 der Gleichrichteranordnung 50 und über die Leuchtdiode 6 in den kapazitiven Speicher 53 und lädt diesen auf. Während der Dauer des Stromflusses durch die Leuchtdiode 6 gibt diese ein Lichtsignal ab. Sobald die Spannung an dem kapazitiven Speicher 53 den der Zenerspannung der Zenerdiode 58 entsprechenden Schwellenwert des Kippspannungsschalters 56 überschreitet, wird der Hilfsthyristor 57 des Kippspannungsschalters 56 durch die Zenerdiode 58 gezündet; der Hilfsthyristor 57 bewirkt daraufhin einen Kurzschluß des kapazitiven Speichers 53 und der mit ihm in Reihe liegenden Leuchtdiode 6 und beendet so die Aussendung des Lichtsignales durch die Leuchtdiode 6. Während der Hilfsthyristor 57 stromleitend ist, kann sich der kapazitive Speicher 53 über den Entladungswiderstand 55 entladen, um für eine erneute Ansteuerung der Leuchtdiode 6 wieder durch den Verschiebungsstrom aufgeladen werden zu können.

Um zu verhindern, daß während der Dauer eines Betriebszustandes des Thyristors 1 zufällige, sprunghafte Änderungen der Spannung an dem Thyristor 1 und die dadurch hervorgerufenen Verschiebungsströme in dem Bedämpfungskondensator 3 Stromimpulse durch die Leuchtdiode 6 erzeugen können, kann der in der Schaltungsanordnung nach Fig. 6 zwischen den mit den Bezugszeichen 59 und 60 versehenen Anschlußpunkten liegende Entladewiderstand durch die in Fig. 7 dargestellte zeitabhängig gesteuerte Schalteinrichtung 61 ersetzt werden. Diese weist einen weiteren Hilfsthyristor 62 auf, dem eine Reihenschaltung aus einem Kondensator 63 und einem Widerstand 64 parallel geschaltet ist; der Gateanschluß des Hilfsthyristors 62 ist über eine weitere Zenerdiode 65 mit der Verbindungsstelle des Widerstandes 64 und des Kondensators 63 verbunden.

12 Ansprüche
7 Figuren

Patentansprüche

1. Schaltungsanordnung zur Überwachung eines Thyristors (1), dem in einem Parallelzweig eine Reihenschaltung aus einem Bedämpfungswiderstand (2) und einem Bedämpfungskondensator (3) zugeordnet ist, mit einer Signalgebervorrichtung (4), an deren Ausgang (5) eine Leuchtdiode (6) zur Aussendung von Lichtsignalen an eine Auswerteeinrichtung angeschlossen ist, d a d u r c h   g e k e n n z e i c h n e t ,   daß die Signalgebervorrichtung (4) eingangsseitig in Reihe mit dem Bedämpfungskondensator (3) liegt und Schaltungsmittel zur Erzeugung einer aus dem Verschiebungsstrom durch den Bedämpfungskondensator (3) abgeleiteten Ausgangsgröße zur Beaufschlagung der Leuchtdiode (6) enthält.

2. Schaltungsanordnung nach Anspruch 1, d a d u r c h   g e k e n n z e i c h n e t ,   daß die Signalgebervorrichtung (4) eingangsseitig in Reihe mit dem Bedämpfungswiderstand (2) angeordnet ist.

3. Schaltungsanordnung nach Anspruch 1, d a d u r c h   g e - k e n n z e i c h n e t ,   daß die Signalgebervorrichtung (4) eingangsseitig parallel zu dem Bedämpfungswiderstand (2) oder einem Teil von diesem angeordnet ist.

4. Schaltungsanordnung nach Anspruch 2, d a d u r c h   g e - k e n n z e i c h n e t ,   daß die Signalgebervorrichtung (4) eingangsseitig einen Stromwandler (30) enthält, der mit seinen Primärstromzuführungsteilen in Reihe mit dem Bedämpfungswiderstand (2) und dem Bedämpfungskondensator (3) angeordnet ist (Fig. 4).

5. Schaltungsanordnung nach Anspruch 4, d a d u r c h g e k e n n z e i c h n e t , daß der Stromwandler (30) einen Eisenkern (31) mit geringer Sättigungsmagnetisierung aufweist.

6. Schaltungsanordnung nach einem der vorangehenden Ansprüche, d a d u r c h g e k e n n z e i c h n e t , daß die Signalgebervorrichtung (4) eine Gleichrichteranordnung (9; 21; 33; 50) enthält, die eingangsseitig in der Signalgebervorrichtung (4) angeordnet ist.

7. Schaltungsanordnung nach Anspruch 6, d a d u r c h g e k e n n z e i c h n e t , daß der Gleichrichteranordnung (21, 33) eine Spannungsteileranordnung (22, 35) nachgeordnet ist und daß zwischen dem Ausgang (25; 38) der Spannungsteileranordnung (21; 33) und dem Ausgang (5) der Signalgebervorrichtung (4) ein Schwellenspannungselement (26; 39) liegt, das in einen stromleitenden Zustand übergeht, sobald die an ihm abfallende Spannung einen vorgegebenen Schwellenwert überschreitet (Fig. 2/4.

8. Schaltungsanordnung nach Anspruch 7, d a d u r c h g e k e n n z e i c h n e t , daß die Spannungsteileranordnung (35) ein Tiefpaßglied mit einem Widerstand (36) und einem mit diesem in Reihe liegenden Speicherkondensator (37) ist.

9. Schaltungsanordnung nach Anspruch 8, d a d u r c h g e k e n n z e i c h n e t , daß das Schwellenspannungselement (39) eine Kippeinrichtung ist, die erst dann von dem stromleitenden Zustand in einen sperrenden Zustand übergeht, wenn der durch sie fließende Strom einen Mindestwert unterschreitet (Fig. 5).

10. Schaltungsanordnung nach Anspruch 6, d a d u r c h g e k e n n z e i c h n e t , daß in einem Längszweig zwischen dem Ausgang (54) der Gleichrichteranordnung (50) und dem Ausgang (6) der Signalgebervorrichtung (4) ein kapazitiver Speicher (53) liegt und daß mit den Eingangsanschlüssen (49) der Signalgebervorrichtung (4) ein Kippspannungsschalter (56) in Verbindung steht, der in einen stromleitenden Zustand kippt, sobald die Spannung an dem kapazitiven Speicher (53) einen vorgegebenen Schwellenwert überschreitet (Fig. 6).

11. Schaltungsanordnung nach Anspruch 10, d a d u r c h g e k e n n z e i c h n e t , daß parallel zu dem kapazitiven Speicher (53) eine zeitabhängig gesteuerte Schalteinrichtung (61) angeordnet ist (Fig. 7).

12. Schaltungsanordnung nach Anspruch 11, d a d u r c h g e k e n n z e i c h n e t , daß die zeitabhängig ge-steuerte Schalteinrichtung (61) einen Hilfsthyristor (62) aufweist, dem eine Reihenschaltung aus einem Widerstand (64) und einem Kondensator (63) parallel geschaltet ist und daß der Gate-Anschluß des Hilfsthyristors (62) über eine Zenerdiode (65) mit der Verbindungsstelle des Widerstandes (64) und des Kondensators (63) verbunden ist (Fig. 7).

FIG.1

FIG.2

FIG.3

0170882

2/2

FIG. 4

FIG. 5

FIG. 6

FIG. 7

Europäisches
Patentamt

**EUROPÄISCHER RECHERCHENBERICHT**

0170882
Nummer der Anmeldung

EP 85 10 8231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 103 182 (FUJI ELECTRIC) <br> * Seite 6, Zeilen 12-23 * <br><br> --- | 1,3 | H 02 M 1/092 <br> H 02 H 7/12 |
| A | DE-A-2 360 173 (SIEMENS) <br> * Seite 2, Absatz 4 - Seite 3, vorletzte Absatz * <br><br> --- | 1,4 | |
| A | EP-A-0 028 784 (ASEA) <br> * Insgesamt * <br><br> ----- | 1 | |

RECHERCHIERTE
SACHGEBIETE (Int. Cl.4)

H 02 M
H 03 K
H 02 H

Der vorliegende Recherchenbericht wurde für alle Patentansprüche erstellt.

| Recherchenort | Abschlußdatum der Recherche | Prüfer |
|---|---|---|
| DEN HAAG | 16-10-1985 | KERN H. |